# EUROPEAN PATENT APPLICATION

(11) **EP 3 048 802 A1**
(43) Date of publication of application: **27.07.2016**
(21) Application number: 14845244.4
(22) Date of filing: 05.09.2014
(51) Int. Cl.: H04N 21/6405, G06F 13/00, H04M 11/00, H04N 21/235, H04N 21/435

(54) **CONTENT PROVISION DEVICE, CONTENT PROVISION METHOD, PROGRAM, TERMINAL DEVICE AND CONTENT PROVISION SYSTEM**

(30) Priority: 20.09.2013 JP 2013196139
(71) Applicant: Sony Corporation, Tokyo 108-0075 (JP)
(72) Inventor: YAMAGISHI, Yasuaki, Tokyo 108-0075 (JP)
(74) Representative: Witte, Weller & Partner Patentanwälte mbB
(86) International application number: PCT/JP2014/073466
(87) International publication number: WO 2015/041071

(57) **Abstract**

The present disclosure relates to a content supply apparatus, a content supply method, a program, a terminal apparatus, and a content supply system that are capable of describing attribute information of each file stored in a packet transmitted by FLUTE session in other than an FDT.

A content supply apparatus of the present disclosure includes: a fragmented stream generation unit that generates a fragmented stream on the basis of source data of content; a FLUTE stream generation unit that generates a FLUTE stream including ALC packets in which the generated fragmented stream is divided and stored, and describes attribute information on the fragmented stream in each of the ALC packets in which the fragmented stream is divided and stored; and a multicast distribution unit that distributes the FLUTE stream by FLUTE multicast. The present disclosure can be applied to a system in which content is distributed by FLUTE multicast.

## Description

### Technical Field

The present disclosure relates to a content supply apparatus, a content supply method, a program, a terminal apparatus, and a content supply system, and more particularly to, a content supply apparatus, a content supply method, a program, a terminal apparatus, and a content supply system that are suitable for use in the case where content is distributed by FLUTE (File Delivery over Unidirectional Transport) multicast.

### Background Art

In recent years, a major streaming service using the Internet has been OTT-V (Over The Top Video), and as the moving image distribution protocol internationally standardized and usable therefor, MPEG-DASH (Moving Picture Experts Group-Dynamic Adaptive Streaming over HTTP; hereinafter called DASH), which employs HTTP similar to one used for browsing websites and the like, has been known (see, for example, Non-patent Document 1).

In DASH, the adaptive streaming technique has been achieved. In other words, on the content supply side, a plurality of streams having the same content but different bit rates due to differences in image qualities and viewing-angle sizes are prepared and distributed. On the other hand, on the content reception side, among the plurality of streams prepared on the supply side, the optimum stream is selected in accordance with the communication environment of the Internet or the decoding capability thereof, and then received and reproduced.

It should be noted that the supply side supplies a meta file called MPD (Media Presentation Description) to the reception side such that the reception side can adaptively select, receive, and reproduce the stream.

In MPD, an address (url information) of a server (supply source) that supplies a chunked content stream (media data such as Audio/Video/Subtitle) to the reception side is described. The reception side accesses the server to be a content supply source on the basis of the url information, requests a stream, and thus receives and reproduces the stream distributed by HTTP unicast from the server in response to the request.

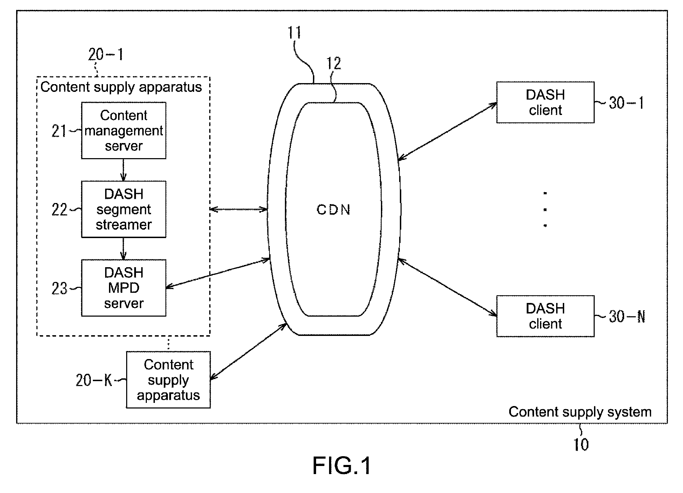

Fig. 1 shows an example of a configuration of a content supply system in which content is distributed by streaming on the basis of DASH.

This content supply system 10 includes a plurality of content supply apparatuses 20 that supply content, and a large number of DASH clients 30 that receive and reproduce content. The DASH clients 30 can be connected to the content supply apparatuses 20 via a CDN (Contents Delivery Network) 12 using the Internet 11.

The content supply apparatus 20 distributes a plurality of streams having the same content but different bit rates. The content supply apparatus 20 includes a content management server 21, a DASH segment streamer 22, and a DASH MPD server 23.

The content management server 21 manages the source data of content to be distributed to the DASH clients 30, generates pieces of streaming data having different bit rates from the source data, and outputs the data to the DASH segment streamer 22.

The DASH segment streamer 22 divides each piece of streaming data into segments temporally, and thus generates a segment stream of Fragmented MP4 or the like, and converts the generated segment stream into files to be held. Additionally, in response to a request (HTTP request) from the DASH client 30, the DASH segment streamer 22 as a WEB server distributes the held files of the segment stream to the request source by HTTP unicast. Additionally, the DASH segment streamer 22 notifies the DASH MPD server 23 of metadata including an address representing the supply source of the files of the segment stream.

The DASH MPD server 23 generates an MPD that describes an address representing the supply source (that is, the DASH segment streamer 22) of the files of the segment stream, and the like. Further, in response to the request (HTTP request) from the DASH client 30, the DASH MPD server 23 as a WEB server distributes the generated MPD to the request source by HTTP unicast.

The DASH client 30 requests the MPD from the DASH MPD server 23 and receives the MPD distributed by HTTP unicast in response to the request. Additionally, the DASH client 30 requests the files of the segment stream from the DASH segment streamer 22 on the basis of the received MPD, and receives and reproduces the files of the segment stream distributed by HTTP unicast in response to the request.

It should be noted that the CDN 12 includes a cache server (not shown), and the cache server caches the MPD or the files of the segment stream distributed by HTTP unicast via the CDN 12. Instead of the DASH MPD server 23 or the DASH segment streamer 22 serving as a WEB server, the cache server can distribute the cached MPD or segment streams to the request source by HTTP unicast, in response to the request from the DASH client 30.

Non-patent Document 1: "Realize uninterrupted moving picture distribution with the existing web server" Mitsuhiro HIRABAYASHI, NIKKEI ELECTRONICS 2012.3.19

### Summary of Invention

### Problem to be solved by the Invention

As described above, in DASH, the adaptive streaming technique using the HTTP unicast distribution is achieved.

Incidentally, if the reception side can receive not only the HTTP unicast distribution but also FLUTE multicast distribution using a mobile phone communication network typified by 3GPP, for example, it is desirable to distribute the stream of content by FLUTE multicast.

In other words, the FLUTE multicast distribution has a guaranteed QoS (guaranteed bandwidth/delay etc.). Thus, in the case where content required for real time performance, such as live video, is distributed, the stream of the content can be simultaneously and stably supplied to a large number of reception sides, as compared to the HTTP unicast distribution.

In the case where the reception side receives and reproduces the stream of content distributed by the FLUTE multicast, it is necessary to first receive and analyze a packet storing a FDT (File Delivery Table) among FLUTE packets (ALC packets) transmitted by FLUTE session.

In FLUTE specifications, it is defined that attribute information of each file stored in each packet transmitted by FLUTE session is described in the FDT. Therefore, in the case where a content stream is distributed by FLUTE multicast, static attribute information (attribute information related to the entire stream) for a file sequence constituting the stream and dynamic attribute information related to individual chunked files should be all described in the FDT.

In such a manner, describing all the static attribute information and the dynamic attribute information in the FDT is redundant for the static attribute information, and this becomes a factor of deteriorating transfer efficiency. Since the dynamic attribute information has a small amount of information but should be synchronously transferred to a subsequent stage together with a corresponding file, this also becomes a factor of deteriorating transfer efficiency.

The present disclosure has been made in view of such circumstances and is capable of acquiring attribute information of each file stored in a packet transmitted by FLUTE session from other than an FDT.

### Means for solving the Problem

According to a first aspect of the present disclosure, there is provided a content supply apparatus that distributes content by FLUTE multicast, including: a fragmented stream generation unit that generates a fragmented stream on the basis of source data of the content; a FLUTE stream generation unit that generates a FLUTE stream including ALC packets in which the generated fragmented stream is divided and stored, and describes attribute information on the fragmented stream in each of the ALC packets in which the fragmented stream is divided and stored; and a multicast distribution unit that distributes the FLUTE stream by FLUTE multicast.

The FLUTE stream generation unit may describe the attribute information on the fragmented stream in Header Extensions of an LCT Header of each of the ALC packets.

The FLUTE stream generation unit may generate the FLUTE stream including also an ALC packet storing an FDT and describe the attribute information on the fragmented stream, which is described in the FDT, also in each of the ALC packets in which the fragmented stream is divided and stored.

The FLUTE stream generation unit may describe dynamic attribute information among the attribute information on the fragmented stream also in each of the ALC packets in which the fragmented stream is divided and stored.

The FLUTE stream generation unit may describe at least Content-Location among the attribute information on the fragmented stream also in each of the ALC packets in which the fragmented stream is divided and stored.

According to the first aspect of the present disclosure, there is provided a content supply method in a content supply apparatus of a content supply apparatus that distributes content by FLUTE multicast, the content supply method including: by the content supply apparatus, a fragmented stream generation step of generating a fragmented stream on the basis of source data of the content; a FLUTE stream generation step of generating a FLUTE stream including ALC packets in which the generated fragmented stream is divided and stored, and describing attribute information on the fragmented stream in each of the ALC packets in which the fragmented stream is divided and stored; and a multicast distribution step of distributing the FLUTE stream by FLUTE multicast.

According to the first aspect of the present disclosure, there is provided a program causing a computer that distributes content by FLUTE multicast to function as: a fragmented stream generation unit that generates a fragmented stream on the basis of source data of the content; a FLUTE stream generation unit that generates a FLUTE stream including ALC packets in which the generated fragmented stream is divided and stored, and describes attribute information on the fragmented stream in each of the ALC packets in which the fragmented stream is divided and stored; and a multicast distribution unit that distributes the FLUTE stream by FLUTE multicast.

In the first aspect of the present disclosure, the fragmented stream is generated on the basis of the source data of the content, the FLUTE stream including the ALC packets in which the generated fragmented stream is divided and stored is generated, the attribute information on the fragmented stream is described in each of the ALC packets in which the fragmented stream is divided and stored, and the FLUTE stream is distributed by FLUTE multicast.

According to a second aspect of the present disclosure, there is provided a terminal apparatus that receives and reproduces a FLUTE stream distributed by FLUTE multicast from a content supply apparatus including a fragmented stream generation unit that generates a fragmented stream on the basis of source data of content, a FLUTE stream generation unit that generates a FLUTE stream including ALC packets in which the generated fragmented stream is divided and stored, and describes attribute information on the fragmented stream in each of the ALC packets in which the fragmented stream is divided and stored, and a multicast distribution unit that distributes the FLUTE stream by FLUTE multicast, the terminal apparatus receiving the ALC packets and synchronously transferring the fragmented stream divided and stored in the received ALC packets and the attribute information described in the ALC packets, to reconfigure and reproduce the fragmented stream.

In the second aspect of the present disclosure, the ALC packets are received, the fragmented stream divided and stored in the received ALC packets and the attribute information described in the ALC packets are synchronously transferred, and thus the fragmented stream is reconfigured and reproduced.

According to a third aspect of the present disclosure, there is provided a content supply system including: a content supply apparatus; and a terminal apparatus, the content supply apparatus including a fragmented stream generation unit that generates a fragmented stream on the basis of source data of content, a FLUTE stream generation unit that generates a FLUTE stream including ALC packets in which the generated fragmented stream is divided and stored, and describes attribute information on the fragmented stream in each of the ALC packets in which the fragmented stream is divided and stored, and a multicast distribution unit that distributes the FLUTE stream by FLUTE multicast. On the other hand, the terminal apparatus receives the ALC packets and synchronously transfers the fragmented stream divided and stored in the received ALC packets and the attribute information described in the ALC packets, to reconfigure and reproduce the fragmented stream.

In the third aspect of the present disclosure, by the content supply apparatus, the fragmented stream is generated on the basis of the source data of the content, the FLUTE stream including the ALC packets in which the generated fragmented stream is divided and stored is generated, the attribute information on the fragmented stream is described in each of the ALC packets in which the fragmented stream is divided and stored, and the FLUTE stream is distributed by FLUTE multicast. Further, by the terminal apparatus, the ALC packets are received, the fragmented stream divided and stored in the received ALC packets and the attribute information described in the ALC packets are synchronously transferred, and thus the fragmented stream is reconfigured and reproduced.

### Effects of the Invention

According to the first aspect of the present disclosure, the attribute information of each file stored in a packet transmitted by FLUTE session can be stored in other than an FDT.

According to the second aspect of the present disclosure, the attribute information of each file stored in a packet transmitted by FLUTE session can be synchronously transferred with good efficiency together with a corresponding file.

According to the third aspect of the present disclosure, the stream of content can be distributed by FLUTE multicast.

### Brief Description of Drawings

[Fig. 1] Fig. 1 is a block diagram showing an example of a configuration of a content supply system in the related art.
[Fig. 2] Fig. 2 is a diagram showing a general outline of a mechanism in which packets are transmitted by FLUTE session.
[Fig. 3] Fig. 3 is a block diagram showing a configuration example of a content supply system to which the present disclosure is applied.
[Fig. 4] Fig. 4 is a diagram showing a configuration of an ALC packet.
[Fig. 5] Fig. 5 is a diagram showing a configuration of an LCT Header.
[Fig. 6] Fig. 6 is a diagram showing a configuration of a Header Extension.
[Fig. 7] Fig. 7 is a diagram showing a configuration of General EXT_FTI.
[Fig. 8] Fig. 8 is a diagram showing an example of attribute information stored in the ALC packet.
[Fig. 9] Fig. 9 is a flowchart for describing processing of the content supply apparatus.
[Fig. 10] Fig. 10 is a block diagram showing a configuration example of a computer.

### Mode(s) for Carrying Out the Invention

Hereinafter, the best mode for carrying out the present disclosure (hereinafter, called embodiment) will be described. In advance of this, a mechanism in which packets are transmitted by FLUTE session and a general outline of this embodiment will be described.

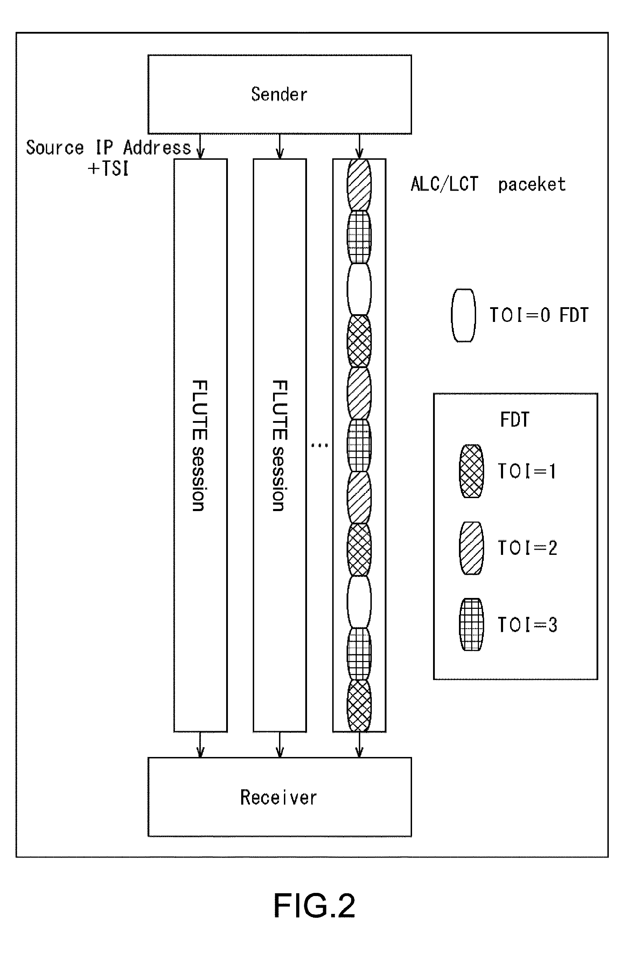

Fig. 2 shows a general outline of a mechanism in which the stream of content is stored in ALC packets and transmitted by FLUTE session.

As shown in the figure, the ALC packets are transmitted by FLUTE session specified by a Source IP Address and a TSI (Transport Session Identifier). For example, a file of a video stream or an audio stream is divided and stored in the ALC packets. Each ALC packet is provided with a TOI (Transport Object Identifier), which is different in each stream in which the ALC packet is stored, and is unique in each FLUTE session.

It is defined that the TOI of an ALC packet storing an FDT is 0. ALC packets storing other data are provided with a common TOI in the case where a data source (a file unit before division) is the same. For example, all ALC packets in which a video stream file (a file unit of one of files of the entire stream, which is generally divided into a plurality of files) is divided and stored are provided with a common TOI. Similarly, all ALC packets in which an audio stream file (a file unit of one of files of the entire stream, which is generally divided into a plurality of files) is divided and stored are provided with a common TOI.

The FDT is periodically transmitted by FLUTE session and describes static and dynamic attribute information on data stored in the ALC packets other than the ALC packets where TOI=0, information for reconfiguring divided data, and the like.

The reception side of the FLUTE session acquires the FDT where TOI=0 in the FLUTE session, analyzes the acquired FDT, and refer to an analysis result, to receive a desired ALC packet. For example, in the case where ALC packets storing a video stream are desired to be received, the FDT is analyzed, a TOI of the ALC packets storing the video stream is confirmed, and ALC packets provided with the TOI are acquired from the FLUTE session and reconfigured for reproduction.

It should be noted that in this embodiment, among the static and dynamic attribute information on data stored in ALC packets other than ALC packets where TOI=0, which are stored in the FDT, the dynamic attribute information is also described in an ALC packet storing corresponding data and then transmitted.

In such a manner, together with the data of the video stream or audio stream, dynamic attribute information corresponding thereto is transmitted, and thus both the data can be synchronously transferred to a subsequent stage with good efficiency.

It should be noted that the static attribute information may also be described in an ALC packet storing corresponding data and then transmitted.

Additionally, in the case where static and dynamic attribute information on data stored in ALC packets other than ALC packets where TOI=0 are described in that data, the description of static and dynamic attribute information to be described in the FDT should not be omitted.

### <Configuration Example of Content Supply System>

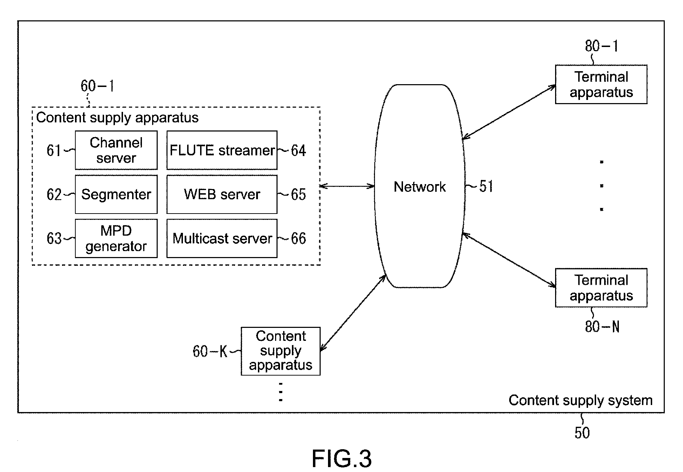

Fig. 3 shows a configuration example of a content supply system as an embodiment of the present disclosure.

This content supply system 50 includes a plurality of content supply apparatuses 60 and a large number of terminal apparatuses 80. The content supply apparatuses 60 and the terminal apparatuses 80 can be connected to one another via a network 51.

The network 51 includes, in addition to a bidirectional communication network typified by the Internet and the CDN using the Internet, various communication networks using terrestrial broadcast, satellite broadcast, mobile broadcast (e)MBMS, and the like.

The content supply apparatus 60 distributes a stream of content by HTTP unicast and also by FLUTE multicast and includes a channel server 61, a segmenter 62, an MPD generator 63, a FLUTE streamer 64, a WEB server 65, and a multicast server 66.

It should be noted that the channel server 61 to the multicast server 66 included in the content supply apparatus 60 may be disposed integrally at one place or may be disposed separately via the Internet and the like.

The channel server 61 generates pieces of streaming data having different bit rates from the source data of content (including live streaming content being captured in real time) to be distributed to the terminal apparatuses 80 and outputs the data to the segmenter 62.

The segmenter 62 divides each piece of streaming data into segments temporally, and thus generates a segment stream of Fragmented MP4 or the like, and outputs the generated segment stream to the FLUTE streamer 64 and the WEB server 65. Further, the segmenter 62 notifies the MPD generator 63 of metadata including an address representing the supply source of the segment stream.

The MPD generator 63 generates an MPD that describes an address representing the supply source (WEB server 65) of the file of the segment stream on the basis of the metadata notified from the segmenter 62, and outputs the MPD to the FLUTE streamer 64 and the WEB server 65. In this MPD, an acquisition destination of an SDP describing source and destination IP addresses of FLUTE session of a FLUTE stream distributed by FLUTE multicast and a port number, which is switchable from a segment stream distributed by HTTP unicast, is described.

The FLUTE streamer 64 stores the segment stream, which is sequentially input from the segmenter 62, in the ALC packets, and thus converts the segment stream into a FLUTE stream and outputs the FLUTE stream to the multicast server 66. Further, the FLUTE streamer 64 stores the MPD generated by the MPD generator 63 in the FLUTE packets and outputs the MPD to the multicast server 66. Additionally, the FLUTE streamer 64 describes an SDP on FLUTE session and outputs the SDP to the multicast server 66.

In response to an acquisition request (HTTP request) for the MPD from the terminal apparatus 80, the WEB server 65 distributes the MPD, which is input from the MPD generator 63, to the request source by HTTP unicast. Further, in response to an acquisition request (HTTP request) for the segment stream from the terminal apparatus 80, the WEB server 65 distributes the file of the segment stream to the request source by HTTP unicast.

The multicast server 66 distributes the MPD by FLUTE multicast. Further, the multicast server 66 distributes the SDP by FLUTE multicast. Additionally, the multicast server 66 distributes the FLUTE stream by FLUTE multicast.

The terminal apparatus 80 acquires the MPD from the content supply apparatus 60 via the network 51. Specifically, the terminal apparatus 80 transmits an HTTP request and, in response to the HTTP request, receives an MPD distributed by HTTP unicast or receives an MPD distributed by FLUTE multicast. In the case where the terminal apparatus 80 receives the MPD distributed by FLUTE multicast, announcement information describing a portal channel of the multicast server 66 that performs FLUTE multicast distribution is referred to.

In the case where the FLUTE multicast distribution is performed via the mobile broadcast (e)MBMS included in the network 51, the announcement information is made known via an interaction channel or a broadcast/multicast channel by a USD (User Service Description) or the like in the MBMS. Further, in the case where the FLUTE multicast distribution is performed via terrestrial broadcast or satellite broadcast included in the network 51, the announcement information is made known via an interaction channel or a broadcast/multicast channel by an ESG (Electronic Service Guide) or the like of DVB-H(IPDC).

Further, the terminal apparatus 80 transmits an acquisition request for the segment stream to the WEB server 65 on the basis of the acquired MPD and, in response to the acquisition request, receives and reproduces a file of the segment stream distributed by HTTP multicast.

Additionally, the terminal apparatus 80 acquires an SDP on the basis of the acquired MPD, and receives and reproduces a FLUTE stream distributed by FLUTE multicast on the basis of the SDP.

### <Description of Attribute Information in ALC Packet>

Next, description will be given on a specific method of describing in ALC packets attribute information on a FLUTE stream distributed by FLUTE multicast. It should be noted that processing of describing in ALC packets the attribute information on a FLUTE stream is executed when the segment stream is converted into a FLUTE stream by the FLUTE streamer 64.

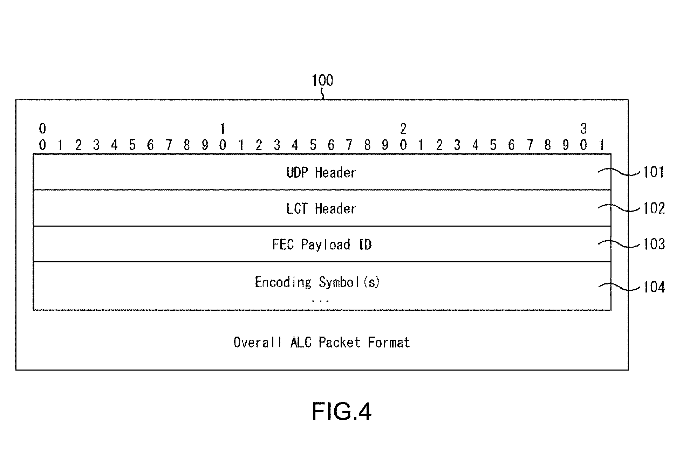

Fig. 4 shows a configuration of an ALC packet on a UDP/IP. As shown in the figure, an ALC packet 100 includes a UDP Header 101, an LCT Header 102, an FEC Payload ID 103, and an Encoding Symbol(s) 104.

In the ALC packet 100, the attribute information on a FLUTE stream is described in the LCT Header 102. Divided FLUTE streams are stored in the Encoding Symbol(s) 104.

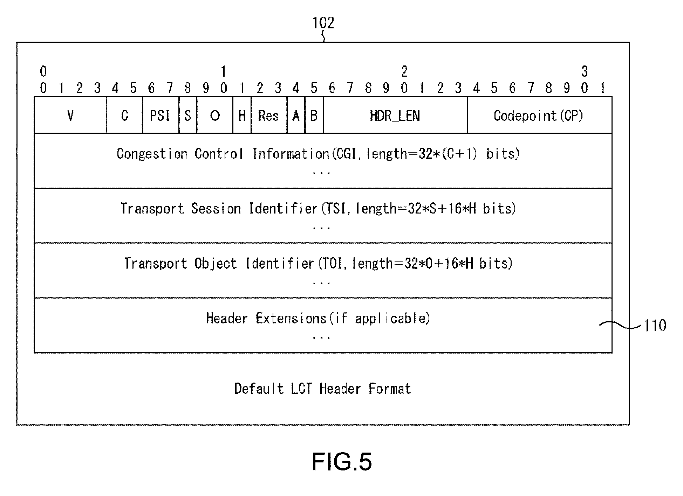

Fig. 5 shows a configuration of the LCT Header 102. In the LCT Header 102, the attribute information on the FLUTE stream is described in a Header Extension 110.

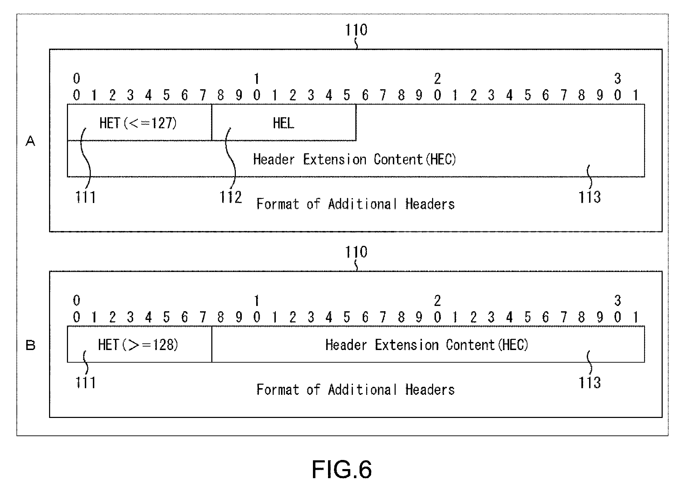

Fig. 6 shows a configuration example of the Header Extension 110, in which part A shows a first configuration example and part B shows a second configuration example.

The first configuration example of the Header Extension 110 includes a HET (Header Extension Type) 111, a HEL (Header Extension Length) 112, and a HEC (Header Extension Content) 113. The second configuration example of the Header Extension 110 includes a HET 111 and a HEC (Header Extension Content) 113.

The HET 111 shows a type of the Header Extension 110. In other words, by a value of the HET 111, a type of information described in the HEC 113 that will be described later can be specified. In the HEL 112, the HEC 113 showing the data length of the Header Extension 110 by N (integer) times of 32-bit words is a variable length, and the content of the Header Extension 110 (in this case, the attribute information of the FLUTE stream) is described.

In this embodiment, a Header Extension 110 of a General EXT_FTI format where predetermined HET is 64 and a Header Extension 110 where newly defined HET is 100 (that may be another value not predetermined) are used.

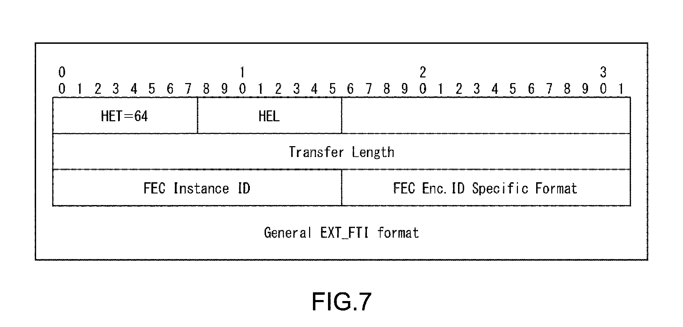

Fig. 7 shows a configuration of the Header Extension 110 of the General EXT_FTI format where HET=64. As shown in the same figure, in the HEC 113 of the Header Extension 110 of the General EXT_FTI format, a Transfer-Length of the FDT, FEC-based attributes, and the like are described.

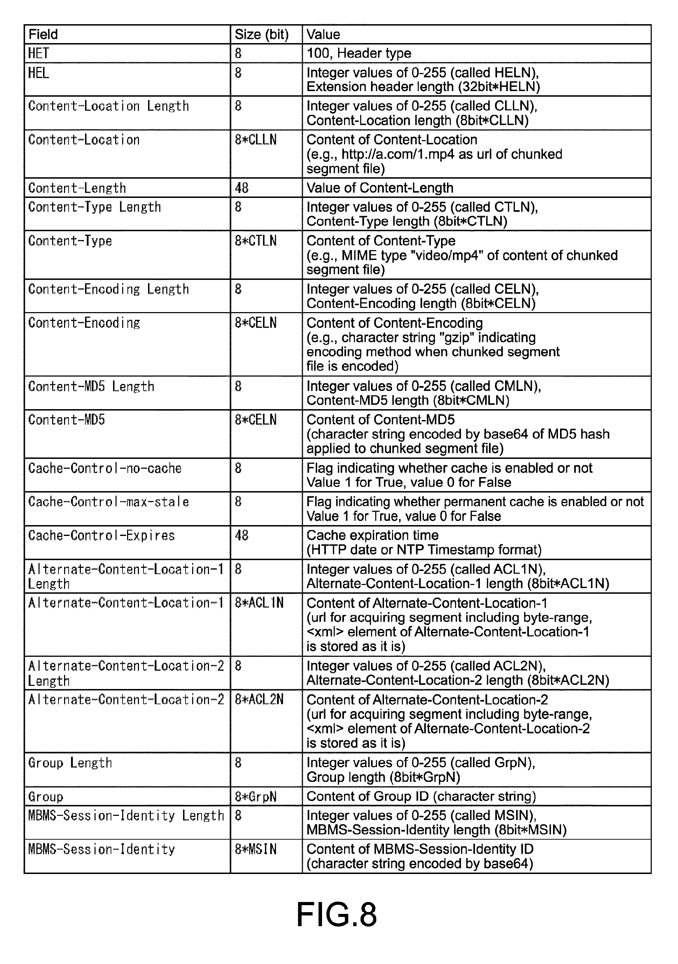

Fig. 8 shows dynamic or static attribute information that can be stored in the HEC 113 of the Header Extension 110 where HET=100. Of those, Content-Location, Content-Length, Content-Type, Content-Encoding, and Content-MD5 are attribute information on a file distributed by FLUTE, and Cache-Control-xxx, Alternate-Content-Location-1 and 2, Group, and MBMS-Session-Identity are attribute information related to 3GPP.

Among the attribute information shown in Fig. 8, Content-Location as one piece of the dynamic attribute information is described in the HEC 113 without fail.

It should be noted that attribute information not shown in Fig. 8 (for example, information on a service, which is to be transmitted on an upper layer normally), may be described in the Header Extension 110 and distributed by FLUTE multicast.

### <Operation of Content Supply System 50>

Next, the operation of the content supply system 50 will be described.

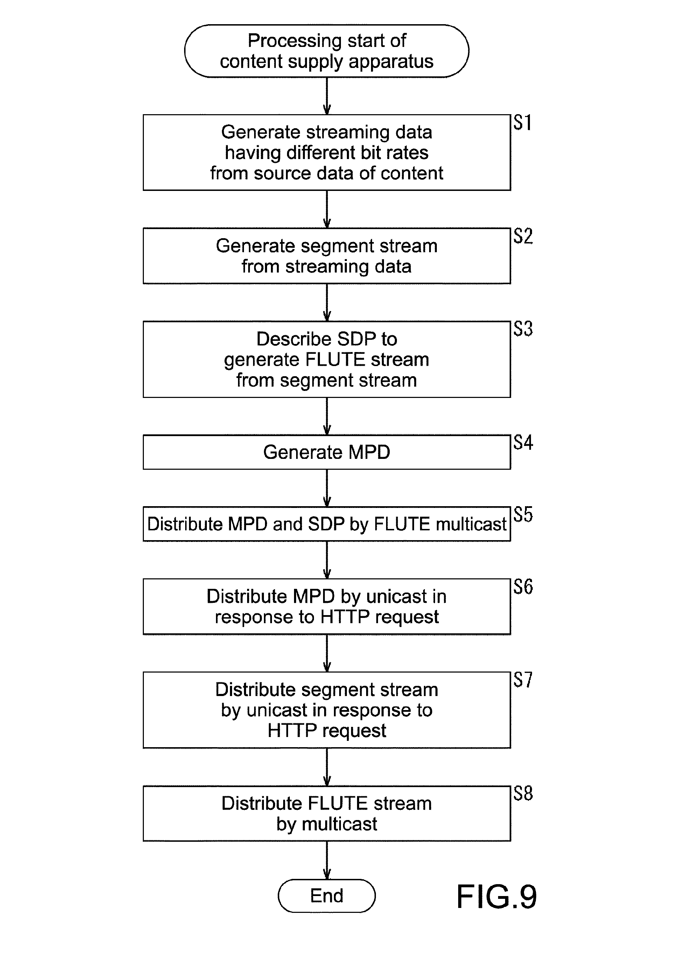

Fig. 9 is a flowchart for describing processing in which the content supply apparatus 60 distributes a segment stream of content by HTTP unicast and also distributes a FLUTE stream by FLUTE multicast (hereinafter, called processing of content supply apparatus).

In Step S1, the channel server 61 generates pieces of streaming data having different bit rates from source data of content to be distributed to the terminal apparatus 80 and outputs the data to the segmenter 62. In Step S2, the segmenter 62 generates a segment stream of Fragmented MP4 or the like on the basis of each piece of streaming data and outputs the segment stream to the FLUTE streamer 64 and the WEB server 65. Further, the segmenter 62 notifies the MPD generator 63 of metadata including an address representing a supply source of the segment stream.

In Step S3, the FLUTE streamer 64 converts the segment stream input from the segmenter 62 into a FLUTE stream and outputs the FLUTE stream to the multicast server 66. Further, the FLUTE streamer 64 stores an MPD generated in the MPD generator 63 in a FLUTE packet and outputs the MPD to the multicast server 66. Additionally, the FLUTE streamer 64 generates an SDP on FLUTE session and outputs the SDP to the multicast server 66.

In Step S4, the MPD generator 63 generates an MPD that describes an address representing a supply source (WEB server 65) of a file of the segment stream distributed by HTTP unicast, an acquisition destination of an SDP describing a source IP address of FLUTE session of a FLUTE stream distributed by FLUTE multicast, which is switchable from a segment stream, and the like, and outputs the MPD to the FLUTE streamer 64 and the WEB server 65.

In Step S5, the multicast server 66 distributes the MPD and the SDP by FLUTE multicast.

In Step S6, in the case where an acquisition request for the MPD is made from the terminal apparatus 80, the WEB server 65 distributes the MPD input from the MPD generator 63 to the request source by HTTP unicast.

When the terminal apparatus 80 that receives the MPD distributed by multicast or unicast issues an HTTP request for requesting a segment stream on the basis of the MPD, in Step S7, the WEB server 65 distributes a file of the requested segment stream to the request source by HTTP unicast. The segment stream distributed by HTTP unicast is received and reproduced by the terminal apparatus 80.

On the other hand, the multicast server 66 distributes the FLUTE stream by FLUTE multicast in Step S8. In the case where the terminal apparatus 80 receives and reproduces the FLUTE stream distributed by FLUTE multicast, the terminal apparatus 80 acquires an SDP on the basis of the acquired MPD, receives FLUTE session distributing the FLUTE stream on the basis of the SDP, and receives ALC packets in which a desired FLUTE stream is divided and stored.

As described above, in this embodiment, since the attribute information is described in ALC packets in which a desired FLUTE stream is divided and stored, the data in which the FLUTE stream is divided and the attribute information can be synchronously transferred to a subsequent stage rapidly. Therefore, the FLUTE stream can be rapidly reconfigured and reproduced.

Incidentally, the content supply apparatuses 60 and the terminal apparatuses 80 that execute the series of processing described above can be each configured by hardware or can be achieved when a computer executes software. This computer includes a computer incorporated in dedicated hardware, a general-purpose personal computer capable of executing various functions by installing various programs therein, and the like.

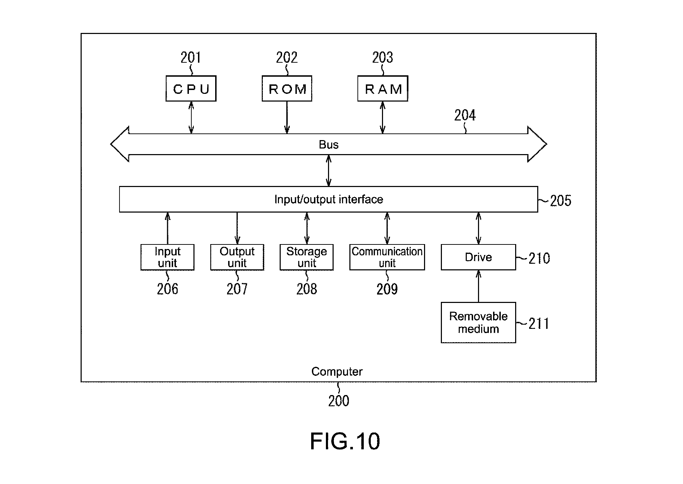

Fig. 10 is a block diagram showing a configuration example of hardware of the computer described above.

In this computer 200, a CPU (Central Processing Unit) 201, a ROM (Read Only Memory) 202, and a RAM (Random Access Memory) 203 are connected to one another through a bus 204.

Additionally, an input/output interface 205 is connected to the bus 204. An input unit 206, an output unit 207, a storage unit 208, a communication unit 209, and a drive 210 are connected to the input/output interface 205.

The input unit 206 includes a keyboard, a mouse, a microphone, or the like. The output unit 207 includes a display, a speaker, or the like. The storage unit 208 includes a hard disk, a nonvolatile memory, or the like. The communication unit 209 includes a network interface or the like. The drive 210 drives a removable medium 211 such as a magnetic disc, an optical disc, a magneto-optic disc, or a semiconductor memory.

In the computer 200 configured as described above, the series of processing described above is performed when the CPU 201 loads a program stored in, for example, the storage unit 208 to the RAM 203 via the input/output interface 205 and the bus 204 and executes the program.

The program executed by the computer 200 (CPU 201) can be provided by being recorded in the removable medium 211 as a packaged medium, for example. Further, the program can be provided via a wired or wireless transmission medium such as a local area network, the Internet, or digital satellite broadcast.

In the computer 200, the program can be installed in the storage unit 208 via the input/output interface 205 by mounting the removable medium 211 in the drive 210. Further, the program can be installed in the storage unit 208 by being received in the communication unit 209 via the wired or wireless transmission medium. In addition, the program can be installed in advance in the ROM 202 or the storage unit 208.

It should be noted that the program executed by the computer 200 may be programs chronologically processed along the order described herein or programs processed in parallel or at necessary timings such as an invocation is performed.

The embodiment of the present disclosure is not limited to the above embodiment and various modifications can be made without departing from the gist of the present disclosure.

The present disclosure can have the following configurations.
(1) A content supply apparatus that distributes content by FLUTE multicast, including:
   a fragmented stream generation unit that generates a fragmented stream on the basis of source data of the content;
   a FLUTE stream generation unit that generates a FLUTE stream including ALC packets in which the generated fragmented stream is divided and stored, and describes attribute information on the fragmented stream in each of the ALC packets in which the fragmented stream is divided and stored; and
   a multicast distribution unit that distributes the FLUTE stream by FLUTE multicast.
(2) The content supply apparatus according to (1), in which
   the FLUTE stream generation unit describes the attribute information on the fragmented stream in Header Extensions of an LCT Header of each of the ALC packets.
(3) The content supply apparatus according to (1) or (2), in which
   the FLUTE stream generation unit generates the FLUTE stream including also an ALC packet storing an FDT and describes the attribute information on the fragmented stream, which is described in the FDT, also in each of the ALC packets in which the fragmented stream is divided and stored.
(4) The content supply apparatus according to any one of (2) and (3), in which
   the FLUTE stream generation unit describes dynamic attribute information among the attribute information on the fragmented stream also in each of the ALC packets in which the fragmented stream is divided and stored.
(5) The content supply apparatus according to any one of (2) and (4), in which
   the FLUTE stream generation unit describes at least Content-Location among the attribute information on the fragmented stream also in each of the ALC packets in which the fragmented stream is divided and stored.

### Description of Symbols

- 50: content supply system
- 51: network
- 60: content supply apparatus
- 61: channel server
- 62: segmenter
- 63: MPD generator
- 64: FLUTE streamer
- 65: WEB server
- 66: multicast server
- 80: terminal apparatus
- 200: computer
- 201: CPU

## Claims

1. A content supply apparatus that distributes content by FLUTE multicast, comprising:
a fragmented stream generation unit that generates a fragmented stream on the basis of source data of the content;
a FLUTE stream generation unit that generates a FLUTE stream including ALC packets in which the generated fragmented stream is divided and stored, and describes attribute information on the fragmented stream in each of the ALC packets in which the fragmented stream is divided and stored; and
a multicast distribution unit that distributes the FLUTE stream by FLUTE multicast.

2. The content supply apparatus according to claim 1, wherein
the FLUTE stream generation unit describes the attribute information on the fragmented stream in Header Extensions of an LCT Header of each of the ALC packets.

3. The content supply apparatus according to claim 2, wherein
the FLUTE stream generation unit generates the FLUTE stream including also an ALC packet storing an FDT and describes the attribute information on the fragmented stream, which is described in the FDT, also in each of the ALC packets in which the fragmented stream is divided and stored.

4. The content supply apparatus according to claim 2, wherein
the FLUTE stream generation unit describes dynamic attribute information among the attribute information on the fragmented stream also in each of the ALC packets in which the fragmented stream is divided and stored.

5. The content supply apparatus according to claim 4, wherein
the FLUTE stream generation unit describes at least Content-Location among the attribute information on the fragmented stream also in each of the ALC packets in which the fragmented stream is divided and stored.

6. A content supply method in a content supply apparatus of a content supply apparatus that distributes content by FLUTE multicast, the content supply method comprising: by the content supply apparatus,
a fragmented stream generation step of generating a fragmented stream on the basis of source data of the content;
a FLUTE stream generation step of generating a FLUTE stream including ALC packets in which the generated fragmented stream is divided and stored, and describing attribute information on the fragmented stream in each of the ALC packets in which the fragmented stream is divided and stored; and
a multicast distribution step of distributing the FLUTE stream by FLUTE multicast.

7. A program causing a computer that distributes content by FLUTE multicast to function as:
a fragmented stream generation unit that generates a fragmented stream on the basis of source data of the content;
a FLUTE stream generation unit that generates a FLUTE stream including ALC packets in which the generated fragmented stream is divided and stored, and describes attribute information on the fragmented stream in each of the ALC packets in which the fragmented stream is divided and stored; and
a multicast distribution unit that distributes the FLUTE stream by FLUTE multicast.

8. A terminal apparatus that receives and reproduces a FLUTE stream distributed by FLUTE multicast from a content supply apparatus including
a fragmented stream generation unit that generates a fragmented stream on the basis of source data of content,
a FLUTE stream generation unit that generates a FLUTE stream including ALC packets in which the generated fragmented stream is divided and stored, and describes attribute information on the fragmented stream in each of the ALC packets in which the fragmented stream is divided and stored, and
a multicast distribution unit that distributes the FLUTE stream by FLUTE multicast,
the terminal apparatus receiving the ALC packets and synchronously transferring the fragmented stream divided and stored in the received ALC packets and the attribute information described in the ALC packets, to reconfigure and reproduce the fragmented stream.

9. A content supply system, comprising:
a content supply apparatus; and
a terminal apparatus,
the content supply apparatus including
a fragmented stream generation unit that generates a fragmented stream on the basis of source data of content,
a FLUTE stream generation unit that generates a FLUTE stream including ALC packets in which the generated fragmented stream is divided and stored, and describes attribute information on the fragmented stream in each of the ALC packets in which the fragmented stream is divided and stored, and
a multicast distribution unit that distributes the FLUTE stream by FLUTE multicast,
the terminal apparatus receiving the ALC packets and synchronously transferring the fragmented stream divided and stored in the received ALC packets and the attribute information described in the ALC packets, to reconfigure and reproduce the fragmented stream.

## Amended claims

### Amended claims under Art. 19.1 PCT

1. (Currently amended) A content supply apparatus that distributes content by FLUTE multicast, comprising:
a fragmented stream generation unit that generates a fragmented stream on the basis of source data of the content;
a FLUTE stream generation unit that generates a FLUTE stream including ALC packets in which the generated fragmented stream is divided and stored, and describes, out of static attribute information and dynamic attribute information on the fragmented stream, only the dynamic attribute information in each of the ALC packets in which the fragmented stream is divided and stored; and
a multicast distribution unit that distributes the FLUTE stream by FLUTE multicast.

2. (Currently amended) The content supply apparatus according to claim 1, wherein
the FLUTE stream generation unit describes the dynamic attribute information out of the static attribute information and dynamic attribute information on the fragmented stream in Header Extensions of an LCT Header of each of the ALC packets.

3. (Currently amended) The content supply apparatus according to claim 2, wherein
the FLUTE stream generation unit generates the FLUTE stream including also an ALC packet storing an FDT and describes the dynamic attribute information out of the static attribute information and dynamic attribute information on the fragmented stream, which is described in the FDT, also in each of the ALC packets in which the fragmented stream is divided and stored.

4. (Canceled)

5. (Currently amended) The content supply apparatus according to claim 1, wherein
the FLUTE stream generation unit describes at least Content-Location as the dynamic attribute information on the fragmented stream also in each of the ALC packets in which the fragmented stream is divided and stored.

6. (Currently amended) A content supply method in a content supply apparatus of a content supply apparatus that distributes content by FLUTE multicast, the content supply method comprising: by the content supply apparatus,
a fragmented stream generation step of generating a fragmented stream on the basis of source data of the content;
a FLUTE stream generation step of generating a FLUTE stream including ALC packets in which the generated fragmented stream is divided and stored, and describing, out of static attribute information and dynamic attribute information on the fragmented stream, only the dynamic attribute information in each of the ALC packets in which the fragmented stream is divided and stored; and
a multicast distribution step of distributing the FLUTE stream by FLUTE multicast.

7. (Currently amended) A program causing a computer that distributes content by FLUTE multicast to function as:
a fragmented stream generation unit that generates a fragmented stream on the basis of source data of the content;
a FLUTE stream generation unit that generates a FLUTE stream including ALC packets in which the generated fragmented stream is divided and stored, and describes, out of static attribute information and dynamic attribute information on the fragmented stream, only the dynamic attribute information in each of the ALC packets in which the fragmented stream is divided and stored; and
a multicast distribution unit that distributes the FLUTE stream by FLUTE multicast.

8. (Currently amended) A terminal apparatus that receives and reproduces a FLUTE stream distributed by FLUTE multicast from a content supply apparatus including
a fragmented stream generation unit that generates a fragmented stream on the basis of source data of content,
a FLUTE stream generation unit that generates a FLUTE stream including ALC packets in which the generated fragmented stream is divided and stored, and describes, out of static attribute information and dynamic attribute information on the fragmented stream, only the dynamic attribute information in each of the ALC packets in which the fragmented stream is divided and stored, and
a multicast distribution unit that distributes the FLUTE stream by FLUTE multicast,
the terminal apparatus receiving the ALC packets and synchronously transferring the fragmented stream divided and stored in the received ALC packets and the dynamic attribute information described in the ALC packets, to reconfigure and reproduce the fragmented stream.

9. (Currently amended) A content supply system, comprising:
a content supply apparatus; and
a terminal apparatus,
the content supply apparatus including
a fragmented stream generation unit that generates a fragmented stream on the basis of source data of content,
a FLUTE stream generation unit that generates a FLUTE stream including ALC packets in which the generated fragmented stream is divided and stored, and describes, out of static attribute information and dynamic attribute information on the fragmented stream, the dynamic attribute information in each of the ALC packets in which the fragmented stream is divided and stored, and
a multicast distribution unit that distributes the FLUTE stream by FLUTE multicast,
the terminal apparatus receiving the ALC packets and synchronously transferring the fragmented stream divided and stored in the received ALC packets and the dynamic attribute information described in the ALC packets, to reconfigure and reproduce the fragmented stream.
